# EUROPÄISCHE PATENTSCHRIFT

(11) **EP 0 518 456 B1**
(45) Veröffentlichungstag und Bekanntmachung des Hinweises auf die Patenterteilung: **06.03.1996**
(21) Anmeldenummer: 92250150.7
(22) Anmeldetag: 12.06.1992
(51) Int. Cl.: B61D 43/00, B60K 25/08, H02K 21/24

(54) **Verfahren zum Erzeugen elektrischer Energie mittels Generator sowie die Verwendung in Fahrzeugen mit Gleitschutzsystem**
Method for generating electrical energy by means of a generator and its application in vehicles with an anti-slip system
Procédé pour créer de l'énergie électrique au moyen d'un générateur et son application dans des véhicules équipés d'un système antipatinage

(30) Priorität: 12.06.1991 DE 4119834
(43) Veröffentlichungstag der Anmeldung: 16.12.1992
(73) Patentinhaber: MANNESMANN Aktiengesellschaft, D-40027 Düsseldorf (DE); STÜTZEL GmbH & Co. KG. Gmünder Motoren-Werke, D-73525 Schwäbisch Gmünd (DE)
(72) Erfinder: Kemner, Axel, W-3007 Isernhagen (DE); Keschwari, Mahmud, W-3013 Barsinghausen (DE); Zeller, Peter Kilian, W-7072 Heubach (DE)
(74) Vertreter: Meissner, Peter E., Dipl.-Ing.

(56) Entgegenhaltungen:
- US-A- 4 377 975
- US-A- 4 657 289

## Beschreibung

Die Erfindung betrifft ein Verfahren zur Erzeugung elektrischer Energie aus der Drehbewegung der Achsen von Fahrzeugen, insbesondere schienengebundenen Fahrzeugen, mittels Generatoranordnung, bei der neben der elektrischen Energieerzeugung die Drehzahl der jeweiligen Achse ermittelt wird, sowie eine Achsgeneratoranordnung, insbesondere zur Durchführung des Verfahrens nach Anspruch 1, gemäß Oberbegriff des Patentanspruches 5. Des weiteren befaßt sich die Erfindung mit der Verwendung der nach dem Verfahren nach Anspruch 1 betriebenen Achsgeneratoranordnung.

Aus der DE-PS 25 51 009 ist ein Wechselspannungsgenerator zum Einbau in einen Achslagerdeckel eines Eisenbahnwagens bekannt. Hierbei ist es bekannt, innerhalb des Wechselspannungsgenerators einen digitalen Drehwinkelgeber einzubauen, über den die Drehzahl der mit dem Rotor des Generators verbundenen Achse des Schienenfahrzeuges ermittelt werden kann. Nachteilig ist hierbei, daß ein zusätzlicher Drehwinkelgeber zur Erfassung der Drehzahl der Achse benötigt wird. Das erhöht nicht nur den konstruktiven Aufwand beim Herstellen eines solchen Generators, sondern auch den Wartungsaufwand dieses zusätzlichen Gerätes. Der Rotor dieses bekannten Wechselspannungsgenerators ist mit der Achse des Fahrzeuges starr verbunden und mit Permamentmagneten versehen, deren Feldlinienaustritt in Richtung Stator in axialer Richtung erfolgt. Somit liegt dem Rotor axial gegenüber ein Stator, mit der entsprechenden Anordnung von Induktionsspulen und Ferritkernen. Stator und Rotor, die sich axial gegenüberliegen, sind über einen definierten Luftspalt voneinander beabstandet. Dies führt dazu, daß die erzeugte elektrische Energie in jeder Betriebssituation von dem Maß des Luftspaltes zwischen Rotor und Stator und damit von der axialen Lage der Fahrzeugachse abhängig ist. Da im Betrieb axiale Versetzungen der Achse, beispielsweise beim schnellen Durchfahren von Kurven durchaus gegeben sind, werden die so hervorgerufenen Luftspaltänderungen zwangsläufig einen nachteiligen Einfluß auf die Kontinuität und die Konstanz der Energieerzeugung bewirken. Das eine solche axiale Versetzung sogar unvermeidbar ist, ergibt sich aus der Tatsache, daß der Rotor mit der Achse gekoppelt sein muß und sich entsprechend mit dieser mitdreht und der Stator festgehalten werden muß, was beispielsweise durch eine starre Verbindung mit dem Achslagerträger erreicht wird. Die nachteilige Wirkung axialer Versetzungen der Achse resultieren bei dem bekannten Generator aus der Tatsache, daß Versetzungen im Millimeterbereich schon eine entscheidende Veränderung des Luftspaltes und damit der erzeugten elektrischen Energie verursachen. Die daraus resultierenden Spannungsschwankungen der erzeugten elektrischen Energie sind bei der Verwendung der elektrischen Energie in feinfühligen Meß- bzw. Regelsystemen innerhalb des Schienenfahrzeuges von Nachteil, da zur betriebssicheren Versorgung einer solchen geregelten Einrichtung eine weitgehend spannungskonstante elektrische Energiequelle zur Verfügung stehen muß. Zwischen Energiequelle bzw. "Erzeuger" und "Verbraucher" ist zwar im Regelfall ein Akkumulator als "Puffer" vorgesehen, jedoch sind auch hierbei permanente Schwankungen der elektrischen Spannung nachteilig. Für den Fall, daß beim Ausfall oder einer Störung des Akkumulators im Fahrbetrieb aus sicherheitstechnischen Gründen die Energieversorgung wichtiger Elemente gewährleistet sein muß, ist eine elektrische Energiequelle mit starken Spannungsschwankungen von großem, sogar gefährlichem Nachteil. Da sich abhängig von der Geschwindigkeit schon verschiedene Spannungswerte ergeben, die Spannung jedoch über eine Elektronik konstant gehalten werden muß, würde die Kompensation einer solchen oben beschriebenen zusätzlichen Spannungsschwankung einen zusätzlichen elektronischen Aufwand bedingen.

Die aus dem oben genannten Stand der Technik gegebene Anordnung eines separaten digitalen Drehwinkelgebers innerhalb des Generators, entkoppelt die Funktionen Energieerzeugung und Drehzahlerfassung und macht das System störanfälliger.

Ausgehend von diesem Stand der Technik stellt sich die Erfindung die Aufgabe, ein Verfahren zum Betrieb einer Achsgeneratoranordnung und eine Achsgeneratoranordnung selbst, sowie eine darauf abgestimmte Verwendung desselben zu schaffen, bei dem auf einen separaten Drehwinkelgeber verzichtet werden kann und in allen Betriebssituationen eine sichere und zuverlässige Energieversorgung bei möglichst konstanter elektrischer Spannung gewährleistet ist.

Die gestellte Aufgabe wird hinsichtlich des Verfahrens erfindungsgemäß dadurch gelöst, daß sowohl die elektrische Energieerzeugung als auch die Drehzahlermittlung ausschließlich über die Generatorfunktion erfolgt, wobei die Pulsparameter jedes Induzierten Spannungsverlaufes zur Ermittlung der Drehzahl bewertet werden. Weitere vorteilhafte Ausgestaltungen hinsichtlich des Verfahrens sind in den Unteransprüchen angegeben.

Hinsichtlich der Achsgeneratoranordnung für Fahrzeuge, insbesondere schienengebundene Fahrzeuge, mit einem an die Achse des Fahrzeuges gekoppelten und mit am Umfang verteilt angeordneten Permamentmagneten versehenen Rotor und einem mit Induktionsspulen versehenen Stator, sowie einer Elektronik zur Auswertung der Generatorfunktionen, insbesondere zur Durchführung des Verfahrens nach Anspruch 1, ist die Aufgabe erfindungsgemäß dadurch gelöst, daß im montierten Zustand der Stator koaxial um den Außenumfang des Rotors herum angeordnet ist, daß der magnetische Leitkörper des Statorpaketes bezüglich seiner wirksamen Polfläche in seiner axialen Erstreckung kleiner als die axiale Erstreckung der Polfläche des Rotorpaketes ausgebildet ist, derart, daß das Polüberdeckungsverhältnis zwischen Rotorpaket und Statorpaket in jeder Betriebssituation größer als 1 ist, und daß innerhalb des magnetischen Leitkörpers des Rotorpaketes bezüglich ihrer Polachsen radial verlaufende Permanentmagneten angeordnet sind.

Weitere vorteilhafte Ausgestaltungen hinsichtlich der Achsgeneratoranordnung sind in den Unteransprüchen dargestellt.

Hinsichtlich der Verwendung der nach dem Verfahren betriebenen Achsgeneratoranordnung wird erfindungsgemäß vorgeschlagen, dies in einem Gleitschuzsystem in Fahrzeugen, insbesondere in schienengebundenen Fahrzeugen einzusetzen, bei dem die Energieversorgung zu jedem Gleitschutzsystem von einem zum nächsten gekoppelten Fahrzeug, insbesondere eines Eisenbahnzuges, versorgungselektrisch autark ist und die jeweils ermittelte Drehzahlinformation als Eingangsgröße zum Regelkreis des Gleitschutzsystems eingespeist wird. In weiterer Verwendung wird erfindungsgemäß vorgeschlagen, das Verfahren und die Achsgeneratoranordnung in einer Antriebsschlupfregelung in Fahrzeugen, insbesondere in schienengebundenen Fahrzeugen einzusetzen, bei dem die jeweils ermittelte Drehzahlinformation als Eingangsgröße zur Antriebsschlupfregelung eingespeist wird.

Hinsichtlich des Verfahrens ergibt sich der Vorteil, daß durch die direkte Drehzahlermittlung aus den Pulsparameter jedes Induktionsspannungsverlaufes auf einen separaten Drehzahlgeber verzichtet werden kann. Dies vereinfacht das Verfahren soweit, daß sich zudem auch eine höhere Betriebssicherheit ergibt. Die in weiterer Ausgestaltung der Erfindung vorgeschlagene Pulsbreitenermittlung der Induktionsspannungsverläufe ist hierbei sogar vorteilhaft sowohl für die Drehzahlermittlung als auch zur Funktionskontrolle des Generators und deren Wicklungen eingesetzt. In vorteilhafter Weise kann aus den gemessenen Pulsbreiten gleichzeitig und damit auf sehr einfache Weise die Geschwindigkeit des Fahrzeuges ermittelt werden. Die Ermittlung der Geschwindigkeit ist zwar aus dem bereits zitierten Stand der Technik bekannt, erfolgt jedoch über einen dort separaten Drehzahlgeber, auf den hier verzichtet werden kann. Eine weitere Möglichkeit eröffnet sich bei diesem erfingungsgemäß vorgeschlagenen Verfahren aus der Tatsache, daß auch aus der Pulshöhe sowie der Drehzahl des induzierten Spannungsverlaufes die Geschwindigkeit des Fahrzeuges ermittelt werden kann.

Hinsichtlich der Achsgeneratoranordnung ergeben sich aus den erfindungsgemäß vorgeschlagenen Merkmalen eine Reihe von Vorteilen.

Der Achsgenerator in seiner auf das Verfahren abgestimmten konstruktiven Ausgestaltung liefert den Vorteil, daß durch das gegebene Polüberdeckungsverhältnis eine höhere Kontinuität und Konstanz der erzeugten Spannung gewährleistet ist. Diese Polüberdeckung ist dabei so ausgebildet, daß die axiale Erstreckung des Rotorpaketes die axiale Erstreckung des Statorpaketes überlappt. Die Anordnung des Statorpaketes bezüglich des Rotorpaketes ist außerdem so gewählt, daß in jeder praktisch möglichen Axialverschiebung der Achse das Statorpaket vollkommen vom Rotorpaket überdeckt ist. Die Tatsache, daß außerdem der Stator im Betriebszustand konzentrisch um den Rotor herum angeordnet ist, hat gemeinsam mit der beschriebenen Polüberdeckung die Wirkung, daß die Induktion im entstehenden Luftspalt zwischen Rotor und Stator unabhängig von axialen Verschiebungen bleibt. Eine Axialverschiebung der Fahrzeugachse bzw. des damit verbundenen Rotors hat somit entgegen dem eingangs beschriebenen Stand der Technik keine Luftspaltänderung zur Folge und schließt damit in vorteilhafter Weise durch Axialversetzungen hervorgerufene Spannungsschwankungen vollständig aus. Die Anordnung eines Schrumpfringes der aus einem amagnetischen aber elektrisch leitfähigem Material besteht, hat den Vorteil, daß dieser als reluktanter Dämpferkäfig wirkt. Dies bedeutet, daß selbst bei Versetzungen der Achse in radialer Richtung zwar eine abschnittsweise Luftspaltänderung hervorrufen, eine daraus resultierende Spannungsschwankung jedoch deshalb ausbleibt, weil der Dämpferkäfig dies auf elektrische Weise kompensiert. Der als reluktanter Dämpferkäfig wirkende amagnetische Schrumpfring hat zudem mechanisch die Funktion, daß die Permanentmagnete gegen radiales Herausschleudern während der Drehung des Rotors gesichert werden. Der Schrumpfring hat jedoch noch eine äußerst wichtige elektrische Funktion, nämlich das Kompensieren von Spannungsschwankungen bzw. Oberschwingungen oder Spannungsspitzen bei einem möglichen elektrischen Lastwechsel des Generators. Mit Lastwechsel ist gemeint, daß beispielsweise das abrupte Zuschalten eines Verbrauchers am elektrischen Generatorausgang eine Induktionsspitze erzeugen würde, die jedoch durch den Schrumpfring kompensiert wird. Diese Kompensation erfolgt dadurch, daß durch eine magnetische Flußänderung im Luftspalt ein Strom im Schrumpfring erzeugt wird, der ein Gegenfeld erzeugt und so in Summe auch bei elektrischem Lastwechsel die Luftspaltinduktion konstant hält. Spannungsspitzen und dergleichen sind somit vermieden, was besonders wichtig zum Schutz der Elektronik zur Auswertung der Drehzahl ist. Die Dimensionierung des magnetischen Kreises, also die Geometrie des Stators in bezug auf den Rotor bezüglich der Pole und des beabsichtigten Polüberdeckungsverhältnisses ist dabei in vorteilhafter Weise so abgestimmt, daß der Generator schon bei sehr niedrigen Drehzahlen hinsichtlich seines Generatorausgangsstromes eine Sättigung erfährt, die auch bei einer sehr starken Drehzahlsteigerung weitgehendst konstant bleibt. Dies ist ganz einfach in der Dimensionierung dadurch erreicht, daß die magnetische Sättigung des gesamten magnetischen Kreises sehr früh, d. h. schon bei niedrigen Drehzahlen erreicht wird. Durch diese frühestmögliche Sättigung ist eine bewußte Wirkungsgradminderung des Generators beabsichtigt. Dies gewährleistet am Ausgang des Generators auf sehr vorteilhaft einfache Weise die Anschlußmöglichkeit einer Auswertungselektronik zur Drehzahlermittlung, weil der Ausgang sehr stabil ist. Durch den so erzielten möglichst konstant gehaltenen Generatorausgangsstrom ist der Generator extrem kurzschlußfest und gewährleistet, daß die zur Drehzahlermittlung nötige Elektronik auf eine extrem betriebssichere Weise anschließbar ist. Durch diese Absicherung ist es damit möglich, die Drehzahlermittlung direkt aus dem Induktionsspannungsverlauf ohne Gefährdung der Auswertungselektronik zur Drehzahlermittlung zu gewährleisten.
Die Ausgestaltung des Achsgenerators als Drehstromgenerator hat in Verbindung mit dem Verfahren den Vorteil, daß jede Wicklung für sich einen Induktionsspannungsverlauf liefert und aufgrund der räumlichen Verteilung der Wicklungen bzw. der Induktionsspulen somit eine hohe Ortsauflösung der aus der Pulsbreite ermittelten Drehzahl möglich ist.

Hinsichtlich der Verwendung der nach dem Verfahren nach Anspruch 1 betriebenen Achsgeneratoranordnung, bei dem sowohl bezüglich des Betriebsverfahrens als auch der konstruktiven Merkmale des Achsgenerators eine zuverlässige, betriebssichere und kontinuierlich konstant gehaltene Ausgangsspannung geliefert werden kann, ergeben sich bezogen auf feinfühlige und die Betriebssicherheit des Fahrzeuges bestimmende Elemente, eine Reihe von Vorteilen. Die Verwendung des Verfahrens und der danach betriebenen Achsgeneratoranordnung in einem Gleitschutzsystem in Fahrzeugen, insbesondere schienengebundenen Fahrzeugen, bei dem die Energieversorgung zu jedem Gleitschutzsystem von einem zum nächsten gekoppelten Fahrzeug versorgungselektrisch autark ist, gewährleistet so in vorteilhafter Weise eine hohe Sicherheit. Diese ist besonders in Hochgeschwindigkeitszügen zu erreichen. Bei dieser erfindungsgemäßen Verwendung kommen die Vorteile aus dem Verfahren besonders stark zum Tragen, indem in vorteilhafter Weise die jeweils ermittelte Drehzahl als Eingangsgröße zum Regelkreis des Gleitschutzsystemes eingespeist wird. Der verfahrensmäßige Vorteil, Energieversorgung und Drehzahlermittlung im Generator selbst zu vollziehen und somit außer der reinen Drehzahlermittlung auch die Funktionskontrolle des Generators selbst durchführen zu können, führt so besonders bei der Verwendung in einem Gleitschutzsystem zur Gewährleistung einer extrem hohen Sicherheit des gesamten Betriebes des Eisenbahnzuges. Dieser Vorteil der gleichzeitigen sicheren Energieerzeugung und der direkt aus dem Induktionsspannungsverlauf ermittelten Drehzahl läßt sich unter der Gewährleistung einer hohen Betriebssicherheit auch in einem Antriebsschlupfregelungssystem in Fahrzeugen, insbesondere schienengebundenen Fahrzeugen verwenden. Hierbei ergibt sich dann der Vorteil daraus, daß die im Verfahren erfindungsgemäß vorgeschlagene Drehzahlermittlung bei Verwendung der erfindungsgemäß vorgeschlagenen Achsgeneratoranordnung eine hohe Ortsauflösung der Drehposition der Fahrzeugachse aufweist. Diese Drehzahlermittlung mit hoher Orts- bzw. schneller Drehzahlauflösung macht das Antriebsschlupfregelungssystem entsprechend feinfühlig. Diese Feinfühligkeit schafft die Grundlage für die extrem vorteilhafte Kombinierbarkeit von Verfahren, Achsgeneratoranordnung und Verwendung. Damit ist die Möglichkeit gegeben, den hohen Anforderungen an die Sicherheit in Hochgeschwindigkeitszügen mit technisch einfachen aber extrem zuverlässigen Maßnahmen zu genügen.
Diese Verwendung ist besonders für schnellaufende Güterwagen sehr vorteilhaft da diese den gleichen Sicherheitsbestimmungen, wie Reisezugwagen unterliegen. Das heißt, auch hierbei ist eine Abbremsung aus höheren Geschwindigkeiten innerhalb einer 1000 Meter-Zone zu gewährleisten. Die autarke Energieversorgung eines jeden einzelnen Wagens und damit die Möglichkeit der direkten vor Ort Ansteuerung des Bremssystems gewährleistet, daß das von der Zugmaschine ausgelöste Bremssignal unabhängig von der Zuglänge ohne Verzögerung von einem Wagen in den anderen den Bremsvorgang gleichzeitig einleitet. Eine Verzögerung beispielsweise durch Druckmittelflußverzögerungen von einem Wagen zum anderen sind somit vollständig umgangen. Zur Regelung des Bremsdruckes und Optimierung des Bremsweges wird ein Gleitschutz (ABS) eingesetzt, das abhängig von dem Haftwert zwischen Rad und Schiene optimalen Bremsdruck ermittelt und diesen an das Druckmittel und an die so angesteuerte Bremse weiterleitet.

Wesentlich ist hierbei, daß bei der Verwendung des erfindungsgemäßen Verfahrens und des danach arbeitenden Achsgenerators die ermittelte Frequenz der erzeugten Spannung als Eingangsgröße für das Gleitschutzsystem (ABS) dient. Damit erübrigt sich eine Drehzahlüberwachung der Achsen mittels separatem Drehzahlgeber, da die Drehzahl hierbei beispielsweise aus der gemessenen Pulsbreite der erzeugten Spannung ermittelt wird. Bei der weiteren Verwendung des Verfahrens und des Achsgenerators für eine Antriebschlupfregelung (ASR), beispielsweise für Zugmaschinen erweist es sich ebenfalls als vorteilhaft, daß die Drehzahl der jeweiligen Achse auf die bereits dargestellte erfinderische Weise ermittelt werden kann. Bei der Anordnung eines solchen Systems an einer Zugmaschine könnte dabei sogar auf die Anordnung eines Tachogenerators verzichtet werden, da die Geschwindigkeitsermittlung aus den gemessenen Pulsparametern ableitbar ist.

Die Erfindung ist in der Zeichnung dargestellt und im folgenden näher erläutert.
- Figur 1: zeigt als Blockschaltbild die Funktionsweise des Generators und die Auswertung der Drehzahl.
- Figur 2: zeigt im Blockschaltbild die Auswertung des induzierten Spannungsverlaufes zur Drehzahl.
- Figur 3: zeigt den Achsgenerator im Schnitt
- Figur 4: zeigt eine Parallelschaltung mehrerer Achsgeneratoren im Ladebetrieb.

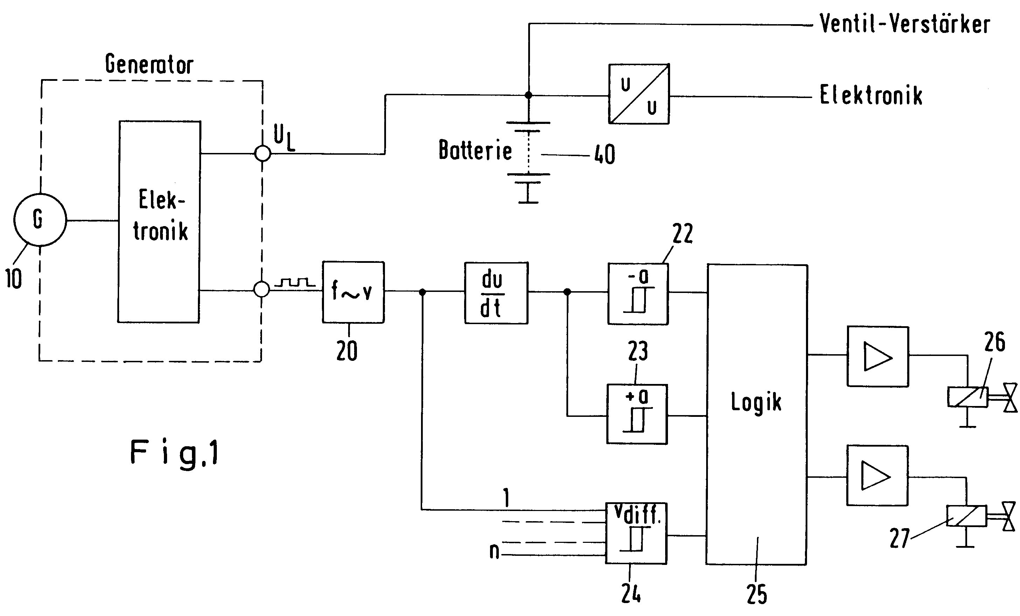

Aus der Figur 1 geht die Funktionsweise bei der Verwendung des erfindungsgemäß vorgeschlagenen Verfahrens und des danach arbeitenden erfindungsgemäß vorgeschlagenen Achsgenerators 10 wie folgt hervor. Die erzeugte Spannung des Generators 10 wird einer Elektronikeinheit zugeführt, die gemäß dem Verfahren die entsprechenden Parameter ermittelt und außerdem eine konstant geregelte Ausgangsspannung liefert, sowie an einem weiteren separaten Ausgang ein digitales Pulsbreitensignal liefert. Das beispielsweise als Rechtecksignal aufbereitete Pulsbreitensignal wird einer Elektronikeinheit 20 zur Ermittlung der Geschwindigkeit der entsprechenden Achse zugeführt, die am Ausgang die ermittelte Geschiwindigkeit liefert.

Diese ermittelte bzw. errechnete Geschwindigkeit wird zum einen einem Geschwindigkeitsvergleicher 24 als Ist-Wert zugeführt, der seinerseits am zweiten Eingang den entsprechenden Soll-Wert abfragt. Das heißt, es wird ermittelt, ob die Umfangsgeschwindigkeit des Rades mit der realen Geschwindigkeit übereinstimmt. Mit anderen Worten, es wird ermittelt, ob das Rad haftreibend, also ohne Geschwindigkeitsdifferenz oder gleitreibend mit entsprechender Geschwindigkeitsdifferenz dreht. Die dabei ermittelte Geschwindigkeitdifferenz wird an eine Logikeinheit 25 gegeben, die die Maßnahmen zur Einleitung der Bremsung und damit der Steuerung der die Bremsung bewirkenden Ventile 26,27 auslöst. Parallel dazu wird aus dem Geschwindigkeits-Ist-Wert durch elektronisch realisierte, mathematisch 1. Ableitung die Beschleunigung errechnet und parallel zwei Komparatoren 22,23 zugeführt, die entscheiden, ob es sich dabei um eine Positiv- oder Negativbeschleunigung handelt; womit gemeint ist, ob es sich um eine Beschleunigung oder um eine Bremsung handelt. Je nachdem, ob Verzögerung oder Beschleunigung vorliegt, wird der entsprechende Ausgang auf die Logikeinheit 25 gebracht, worin über die zu erzielende Bremswirkung entschieden und am Ausgang einem Verstärker zur Erzeugung des für die elektrisch anzusteuernden Ventile 26,27 nötigen Signale zugeführt wird. Zusammengefaßt bedeutet dies, daß parallel aus Geschwindigkeitsbetrachtung und Beschleunigungsbetrachtung sowohl das Gleitschutzsystem (Antiblockiersystem ABS) als auch die Antriebsschlupfregelung (ASR) bewertbar ist. Es wäre auch denkbar, allein aus der Betrachtung der Beschleunigungsverhältnisse sowohl ABS als auch ASR zu speisen, jedoch ist die Geschwindigkeitsbetrachtung für ASR dann interessant, wenn das "Durchdrehen" der Antriebsräder mit hoher Drehzahl erfolgt. In einem solchen Betriebszustand wird innerhalb des Zugfahrzeuges eine Bezugsgeschwindigkeit gebildet, entweder imaginär oder über eine zusätzliche Achse, so daß eine Auswertung der Differenzgeschwindigkeit vorteilhafter ist.

Bei der Verwendung in einem Antriebsschlupfregelungssystem wirken die einzelnen Elemente in ähnlicher Form zusammen. Ebenfalls wird zunächst die Drehzahl-proportionale Pulsbreite der erzeugten elektrischen Spannung gemessen und daraus die Geschwindigkeit ermittelt. Darauf folgt eine Berechnung der Verzögerung bzw. der Beschleunigung der angetriebenen Radsätze und ein Geschwindigkeitsdifferenzvergleich verschiedener Radsätze untereinander. Über die Bewertung der Geschwindigkeitsdifferenzen verschiedener Radsätze an einem Wagen ist somit sogar eine Schwingungserfassung des Radsatzes möglich, die beispielsweise durch asymmetrische Antriebskräfte und damit durch Torsion entstehen können. Damit besteht des weiteren in vorteilhafter Weise die Möglichkeit, so eine Einflußnahmemöglichkeit auf die Motordrehzahlregelung zu haben, worüber solche Schwingungen des Radsatzes kompensierbar sind.

Die Logikeinheit 25 ist mit zwei Ausgängen versehen, die jeweils über einen Verstärker zum einen das Entlüften der die Bremse ansteuernden Ventiles 26 bewirken und über den zweiten Pfad das die Zufuhr des den Arbeitsdruck sperrenden Ventiles 27 bewirken. Dies bewirkt in entsprechend koordinierter Abfolge, daß beispielsweise bei einem Bremsvorgang die Bremse über das Öffnen des Arbeitsdruckventiles 27 mit Druckmittel beaufschlagt und dadurch betätigt wird und daß beim kurzzeitigen Lösen, beispielsweise beim Auslösen des ABS, die Bremse gelöst werden muß, indem die über Ventil 26 gesteuerte Druckmittelleitung entlüftet und das Arbeitsdruckventil 27 geschlossen werden muß.

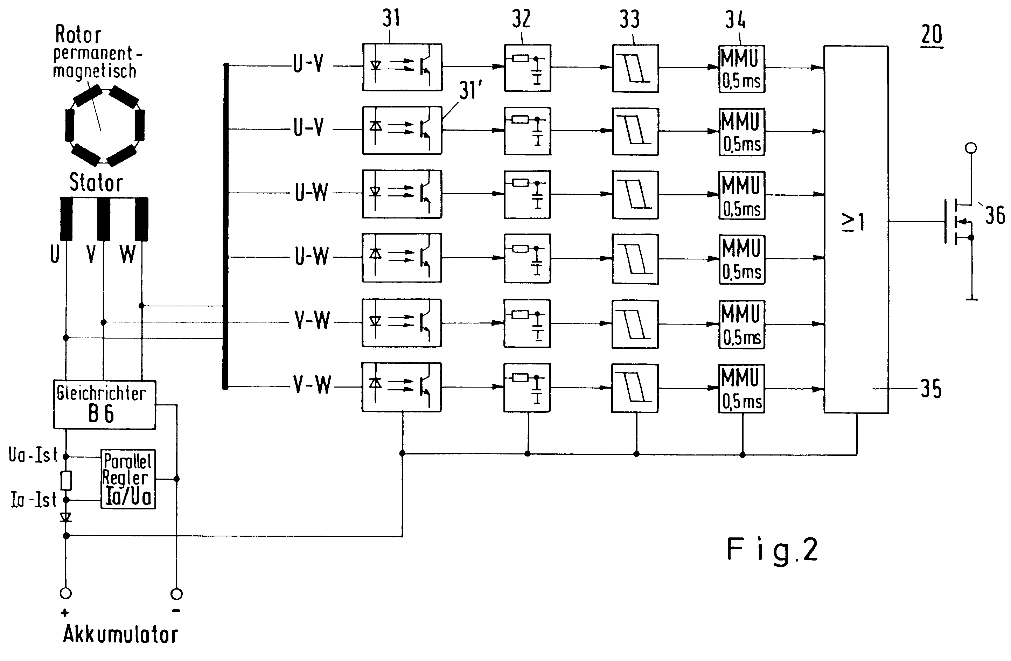

Die Ermittlung der Pulsparameter aus dem induzierten Spannungsverlauf der Induktionsspulen des Achsgenerators ist in Figur 2 dargestellt. Der direkte dreiphasige Ausgang des Stators wird, bevor dieser einem Gleichrichter zugeführt wird, parallel abgegriffen und eine Anordnung von Optokopplern 31,31′... zugeführt. Die Ausgangsphasen sind mit U, V und W bezeichnet, wobei die Optokoppler so angeordnet sind, daß zwischen jeweils zwei Phasen jeweils zwei Optokoppler 31,31′ angeordnet sind, wobei der eine die obere Halbwelle und der andere die untere Halbwelle erfaßt. Somit ergeben sich bei dieser dreiphasigen Anordnung insgesamt sechs entsprechend zeitversetzte Pulsbreitensignale. Diese werden über jeweils ein RC-Glied 32... einem Schmitt-Trigger 33... zugeführt, der ausgangsseitig jeweils einen monostabilen Multivibrator 34... ansteuert. Jedes der sechs Pulsbreitensignale wird damit letztendlich in einer Logikeinheit zusammengefaßt, koordiniert und zeitlich ausgewertet. Die Verwendung von Optokopplern bewirkt nicht nur eine galvanische Trennung zwischen den Ausgangsphasen UVW und der Drehzahlermittlungselektronik, sondern dadurch werden im wesentlichen aus dem Induktionsspannungsverlauf Pulsbreitensignale geformt. Die Anordnung des RC-Gliedes, des Schmitt-Triggers und letztendlich des monostabilen Multivibrators bewirkt, daß Störsignale von der Drehzahlauswertungslogik 35 ferngehalten werden. Der jeweilige monostabile Multivibrator 34 ist jeweils mit einer Zeitkonstante von 0,5 mm/sec belegt, was bedeutet, daß Störsignale mit einer Zeitkonstante von kleiner als 0,5 mm/sec nicht als Pulsbreitensignale akzeptiert werden, sondern als Störsignale keine Auswirkung auf die Drehzahlermittlung haben. Diese Zeitkonstante von 0,5 mm/sec ist auf jedwede Vorgabe veränderbar, jeweils so, daß diese gewählte Zeitkonstante gerade kleiner als die Zeitkonstante des detektierten Pulsbreitensignals ist. Da nun jeder Puls durch seine zeitversetzte Abfolge zum nächsten Puls die Information der letztendlichen Rotor-Stator-Position ortsauflöst, ist damit auch eine feinfühlige Ortsauflösun, der Drehzahl gegeben. Das heißt mit anderen Worten, schon nach einem Sechstel einer Radumdrehung ist eine Drehzahlauswertung möglich; es muß also nicht eine volle Radumdrehung zur Auswertung der Drehzahl bzw. Geschwindigkeit abgewartet werden. Dies kommt dann besonders bei der Verwendung in einem ABS bzw. ASR zum Tragen. Parallel dazu ist in Figur 2 auch die parallele Weiterführung der dreiphasigen Wechselspannung zu einem Gleichrichter B6 dargestellt. Am Ausgang ist ein Parallelregler angeordnet, der seinerseits den gesamten elektrischen für die Energieversorgung relevanten Ausgang des Generators konstant hält. Von hier aus erfolgen dann die Anschlüsse zu den einzelnen Verbrauchern bzw. parallel dazu zum Akkumulator 40.

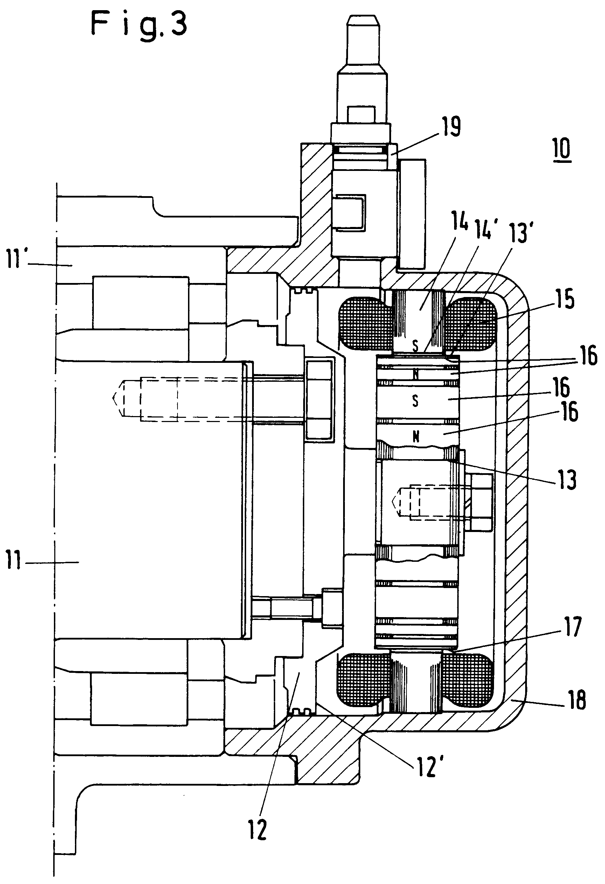

Figur 3 zeigt die erfindungsgemäß vorgeschlagene Achsgeneratoranordnung im Schnitt. Der Rotor 13 ist über einen Flansch 12 direkt mit der Achse 11 des Fahrzeuges verbunden. Der Stator 14 ist innerhalb des Achsdeckels 18, welcher auch als Generatorgehäuse wirkt, so angeordnet, daß er bei der Montage, nachdem der Rotor 13 an der Achse 11 befestigt wurde, quasi auf den Rotor 13, mit Luftspalt beabstandet, aufgeschoben werden kann. Dabei schließt der Deckel 18 des Achsgenerators 10 dann die gesamte Anordnung gehäusemäßig ab. Das Gehäuse selbst ist beispielsweise an das Achslagertraggehäuse 11′ anbringbar. Der Luftspalt zwischen Rotor 13 und Stator 14 ist somit radial zwischen Rotor und Stator orientiert, entgegen dem eingangs beschriebenen Stand der Technik, bei dem der Luftspalt in axialer Richtung orientiert ist.

Die axiale Erstreckung der Pole bzw. Polflächen 13′ des Rotors 13 ist hierbei größer als die axiale Erstreckung der Polfläche 14′ des Statorpaketes 14; mit anderen Worten, das Polüberdeckungsverhältnis zwischen Rotor und Stator ist größer als 1. Damit ist zu erkennen, daß selbst bei axialer Verschiebung des Rotors 13 die Polfläche 14′ des Stators 14 immer noch ganz überdeckt wird von der Polfläche 13′ des Rotors 13. Hierbei ist die Dimensionierung des Stators 14 maßgebend für die Wirkung der frühen Erreichung der magnetischen Sättigung. Die Dimensionierung des Statorpaketes richtet sich hierbei nach der gewünschten magnetischen Sättigung und läßt sich über die üblichen formalen Zusammenhänge errechnen. Die Polfläche 13′ des Rotors 13 ist dabei überdimensioniert, so daß die oben dargestellte Wirkung der Axialverschiebung ohne Einfluß auf die Luftspaltinduktion bleibt. Die Berechnung der magnetischen Sättigung des Statorpaketes 14 ist dann so zu wählen, daß bei der gewünschten Geschwindigkeit schon eine Sättigung des Stromes erreicht wird. Das Statorpaket 14 und das Rotorpaket 13 sind lamelliert, d. h. sie bestehen aus Blechpaketen zur Reduktion der Wirbelstromverluste. Die Induktionsspulen 15 des Stators 14 sind in entsprechender Weise wie dargestellt anzuordnen. Die Permanentmagnete 16 des Rotors 13 sind bezüglich ihrer Polachsen radial aufmagnetisiert, d. h. die Feldlinien treten radial aus. Die Permanentmagnete 16 sind untereinander so angeordnet, daß sich von einem zum anderen Magneten die am Umfang austretenden magnetischen Polaritäten jeweils umkehren.

Innerhalb des Generatorgehäuses 18, d. h. im Deckel, ist der Gleichrichter 19 zur Gleichrichtung der Wechselspannung mit integriert angeordnet, so daß der gesamte elektrische Ausgang des Generators 10 vollständig am Generator selbst angeordnet ist. Der Ausgang des Generators 10 ist dann direkt beispielsweise an einem Laderegler 41 zur Speisung der Akkumulatoren 40 und der Versorgung der Drehzahlermittlungseinrichtung verbunden.

Der mit dem Rotor 13 verbundene an die Achse 11 anzubringende Flansch 12 ist bei diesem Achsgenerator so ausgestaltet, daß er bis an die Innenwand des Generatordeckels 18 heranreicht. Der feststehende Generatordeckel ist innen rund ausgebildet. Der Flansch 12 ist dabei am anliegenden Außenumfang mit einer Labyrinthdichtung 12′ versehen. Diese Labyrinthdichtung 12′ ist mit der dort dargestellten verzahnten Oberfläche versehen. Diese Labyrinthdichtung 12′ kann einstückig mit dem Flansch 12 verbunden sein, also angeformt sein, indem einige parallellaufende Nuten am Umfang des Flansches angebracht werden.

Es ist jedoch auch möglich, den Flansch 12 mit einer separaten Labyrinthdichtung 12′ zu versehen. Diese Labyrinthdichtung verhindert ein Eindringen von Lagerfett in den Generatorraum und schließt ihn somit hermetisch ab.

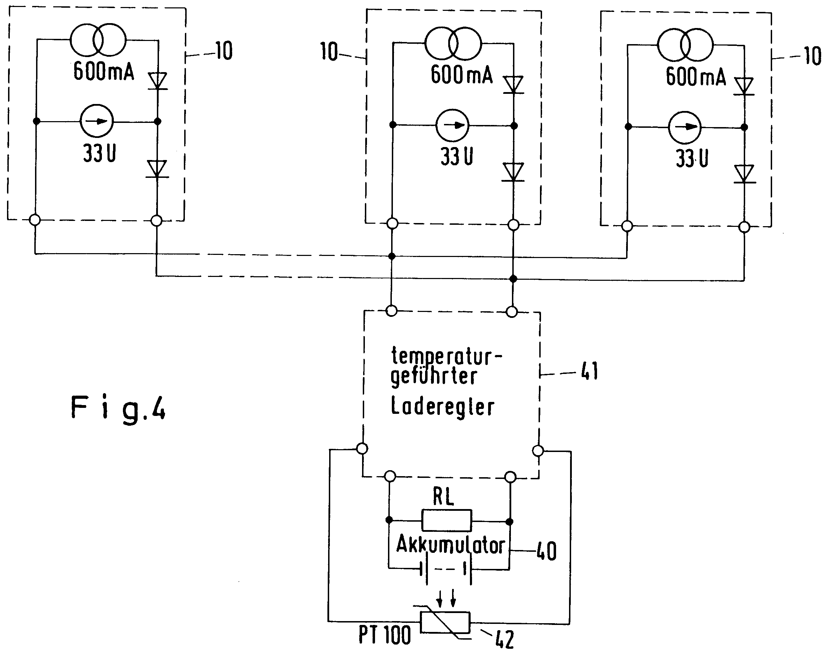

Figur 4 zeigt eine Vielfachanordnung von Generatoren, die parallel geschaltet sind. Die Parallelschaltbarkeit ist besonders durch die erfindungsgemäß vorgeschlagene Ausgestaltung des Achsgenerators ermöglicht, bei dem auf die oben dargestellte Weise ein bezüglich des Stromes extrem konstant geregelter Ausgang vorliegt. Da ebenfalls die Spannung weitgehendst konstant gehalten wird, ist der erfindungsgemäß vorgeschlagene Achsgenerator für die Parallelschaltung sehr geeignet. Die zusammengefaßten parallel geschalteten Ausgänge werden an einem temperaturgeführten Laderegler zusammengeführt, der den Ladebetrieb des Akkumulators entsprechend überwacht und regelt. Die Temperaturüberwachung erfolgt hierbei über einen mit dem Akkumulator mechanisch und wärmeleitmäßig verbundenen temperaturabhängigen Widerstand.

Das erfindungsgemäß vorgeschlagene Verfahren sowie die Achsgeneratoranordnung und Verwendung stellen durch ihre optimal aufeinander abgestimmten Maßnahmen eine optimale Lösung der Aufgabe dar. Auf einen separaten Drehzahlgeber kann verzichtet werden, das System wird dadurch vereinfacht und durch die Ausgestaltung des Achsgenerators steht elektrische Energie derart zur Verfügung, daß in vorteilhafter Weise ein ABS- und/oder ASR-System extrem betriebssicher verwendet werden können. Die Verfahrensmaßnahme, die Drehzahl direkt aus der Generatorfunktion über die Pulsbreitenbewertung zu ermitteln, gemeinsam mit der räumlichen Anordnung der Spulen sowie der sechspulsigen Auswertung der Induktionsspannungsverläufe ist zudem eine hohe Ortsauflösung und damit eine extrem feinfühlige Drehzahlermittlung ermöglicht, die für ABS und ASR "lebenswichtig" sind.

Die im Verfahren erfindungsgemäß vorgeschlagene Bewertung der Pulsparameter zur Drehzahlermittlung und die im Ausführungsbeispiel vorgeschlagene Betrachtung der Pulsbreite als Pulsparameter ist hierbei aus den bereits dargestellten Gründen und der technischen Erläuterungen vorteilhaft. Es ist jedoch auch möglich, aus anderen Pulsparametern die Drehzahl zu ermitteln; beispielsweise durch die Pulshöhe, Pulsabstände, Pulsform und so weiter. Da ein Generator je nach Wicklungsart der Induktionsspulen des Stators neben einer beispielsweise sinusförmigen Induktionsspannung auch rechteck- oder dreieckförmige Spannungsverläufe liefern kann, können unter Umständen die Heranziehung der Pulshöhe oder der Pulsabstände gegenüber der Bewertung der Pulsbreite zur Drehzahlermittlung vorteilhafter sein. Somit gewinnt das Verfahren an weiteren Einsatzmöglichkeiten. Außerdem ist durch die saubere Abstimmung von Verfahren Achsgenerator und Verwendung auch eine Anwendung für andere Fahrzeugtypen, beispielsweise für Lastkraftwagen mit mehreren Anhängern sinnvoll und anwendbar.

## Patentansprüche

1. Verfahren zur Erzeugung elektrischer Energie aus der Drehbewegung der Achsen von Fahrzeugen, insbesondere schienengebundenen Fahrzeugen, mittels Generatoranordnung, bei der neben der elektrischen Energieerzeugung die Drehzahl der jeweiligen Achse ermittelt wird,
**dadurch gekennzeichnet,**
daß sowohl die elektrische Energieerzeugung als auch die Drehzahlermittlung ausschließlich über Generatorfunktion erfolgt, wobei die Pulsparameter jedes induzierten elektrischen Spannungsverlaufes zur Ermittlung der Drehzahl bewertet werden.

2. Verfahren nach Anspruch 1,
**dadurch gekennzeichnet,**
daß eine dreiphasige Wechselspannung induziert wird, und aus den Induktionsspannungsverläufen jeder Phase die Pulsbreiten zur Ermittlung der Drehzahl bewertet werden.

3. Verfahren nach Anspruch 1 und 2,
**dadurch gekennzeichnet,**
daß über die Drehzahlermittlung eine Funktionskontrolle des Generators erfolgt.

4. Verfahren nach einem oder mehreren der vorhergehenden Ansprüche,
**dadurch gekennzeichnet,**
daß aus den gemessenen Pulsbreiten des induzierten Spannungsverlaufes die Geschwindigkeit des Fahrzeuges ermittelt wird.

5. Achsgeneratoranordnung für Fahrzeuge, insbesondere für schienengebundene Fahrzeuge; mit einem an die Achse des Fahrzeuges gekoppelten und mit am Umfang verteilt angeordneten Permanentmagneten versehenen Rotor und einem mit Induktionsspulen versehenen über einen Luftspalt vom Rotor beabstandeten Stator sowie einer Elektronik zur Auswertung der Generatorfunktionen, insbesondere zur Durchführung des Verfahrens nach Anspruch 1,
**dadurch gekennzeichnet,**
daß im montierten Zustand der Stator (14,15) koaxial um den Außenumfang des Rotors (13) herum angeordnet ist, daß der magnetische Leitkörper des Statorpaketes (14) bezüglich seiner wirksamen Polfläche (14′) in seiner axialen Erstreckung kleiner als die axiale Erstreckung der Polfläche (13′) des Rotorpaketes (13) ausgebildet ist, derart, daß das Polüberdeckungsverhältnis zwischen Rotorpaket (13) und Statorpaket (14) in jeder Betriebssituation größer als 1 ist, und daß innerhalb des magnetischen Leitkörpers des Rotorpaketes (13) bezüglich ihrer Polachsen radial verlaufende Permanentmagneten (16) angeordnet sind.

6. Achsgenerator nach Anspruch 5,
**dadurch gekennzeichnet,**
daß der Rotor (13) mittels eines Flansches (12) an die entsprechende Stirnseite (11) der Achse direkt anbringbar ist.

7. Achsgenerator nach Anspruch 5 und 6,
**dadurch gekennzeichnet,**
daß die Permamentmagnete (16) des Rotors (13) über einen aus amagnetischem Material bestehenden und gleichzeitig als Reluktanzring wirkenden Schrumpfring (17) gehalten ist.

8. Achsgenerator nach einem oder mehreren der vorhergehenden Ansprüche,
**dadurch gekennzeichnet,**
daß der Stator (14) innerhalb des Achsdeckels (18) fest angeordnet ist und daß der Achsdeckel (18) mechanisch unabhängig vom Rotor (13) und vom Rotorflansch (12) an das entsprechende Achslagertraggehäuse (11′) des Fahrzeuges anbringbar ist.

9. Achsgenerator nach einem oder mehreren der vorhergehenden Ansprüche,
**dadurch gekennzeichnet,**
daß innerhalb des Achsdeckels (18) des Generators eine elektrische Gleichrichtereinheit (19) integriert angeordnet ist.

10. Achsgenerator nach einem oder mehreren der vorhergehenden Ansprüche,
**dadurch gekennzeichnet,**
daß bei der Erzeugung dreiphasiger Wechselspannung die Phasen elektrisch mit Optokopplern (31,31′...) zur Digitalisierung des Pulsbreitensignals verbunden sind.

11. Achsgenerator nach Anspruch 10,
**dadurch gekennzeichnet,**
daß zwischen jeweils zwei Phasen zwei Optokoppler derart angeordnet sind, daß der jeweils erste Optokoppler die obere und der jeweils zweite Optokoppler die untere Halbwelle der erzeugten Wechselspannung erfaßt.

12. Achsgenerator nach einem oder mehreren der vorhergehenden Ansprüche,
**dadurch gekennzeichnet,**
daß der Achsdeckel (18) des Generators (10) im angebauten Zustand sich teilweise über das Achslagertraggehäuse (11′) erstreckt und daß der Rotorflansch (12) umfangsseitig mit einer innen im Achsdeckel (18) umfangsseitig anliegenden Labyrinthdichtung (12′) versehen ist.

13. Verwendung des nach Anspruch 9 betriebenen
Achsgenerators in einem Gleitschutzsystem in Fahrzeugen, insbesondere in schienengebundenen Fahrzeugen, bei dem die Energieversorgung zu jedem Gleitschutzsystem von einem zum nächsten gekoppelten Fahrzeu, insbesondere eines Eisenbahnzuges, versorgungselektrisch autark ist und die jeweils ermittelte Drehzahlinformation als Eingangsgröße zum Regelkreis des Gleitschutzsystems eingespeist wird.

14. Verwendung des nach Anspruch 9 betriebenen
Achsgenerators in einem Antriebsschlupfregelungssystem in Fahrzeugen, insbesondere in schienengebundenen Fahrzeugen, bei dem die jeweils ermittelte Drehzahlinformation als Eingangsgröße zum Regelkreis der Antriebsschlupfregelung eingespeist wird.

## Claims

1. Method of generating electrical energy from the rotary motion of the axles of motor vehicles, in particular rail vehicles, by means of a generator device, in which not only the electrical energy being generated but also the r.p.m. of the respective axle is determined,
characterised in that
both the generation of electrical energy and detection of the r.p.m. are carried out solely by generator function, the pulse parameters of each induced electrical voltage curve being evaluated in order to determine the r.p.m..

2. Method according to claim 1, characterised in that a three-phase alternating voltage is induced, and from the induction voltage curves of each phase the pulse widths are evaluated in order to determine the r.p.m..

3. Method according to claim 1 and 2, characterised in that the generator function is monitored by determining the r.p.m..

4. Method according to one or more of the preceding clams, characterised in that from the measured pulse widths of the induced voltage curve, the speed of the vehicle is determined.

5. Axle generator device for motor vehicles, in particular for rail vehicles, comprising a rotor coupled to the axle of the vehicle and provided with permanent magnets distributed around the circumference, and comprising a stator spaced from the rotor via an air gap and provided with induction coils, as well as an electronic device for evaluating the generator functions, in particular for carrying out the method according to claim 1, characterised in that in the assembled state the stator (14, 15) is disposed coaxially around the outer circumference of the rotor (13), in that the magnetic conducting body of the stator unit (14) in terms of its effective pole face (14') is smaller in its axial extension than the axial extension of the pole face (13') of the rotor unit (13), such that the pole overlap ratio between the rotor unit (13) and the stator unit (14) is larger than 1 in any operating situation, and in that within the magnetic conducting body of the rotor unit (13) permanent magnets (16) are provided with their pole axes extending radially.

6. Axle generator according to claim 5, characterised in that the rotor (13) can be mounted direct on the corresponding end face (11) of the axle by means of a flange (12).

7. Axle generator according to claim 5 and 6, characterised in that the permanent magnets (16) of the rotor (13) are held via a non-magnetic shrink ring (17) simultaneously acting as a reluctance ring.

8. Axle generator according to one or more of the preceding claims, characterised in that the stator (14) is mounted fixedly inside the axle cover (18) and that the axle cover (18) is mountable mechanically independently of the rotor (13) and of the rotor flange (12) on the corresponding axle bearing support housing (11') of the vehicle.

9. Axle generator according to one or more of the preceding claims, characterised in that an electrical rectifier unit (19) is incorporated inside the axle cover (18) of the generator.

10. Axle generator according to one or more of the preceding claims, characterised in that when three-phase alternating voltage is being generated, the phases are connected electrically to opto-couplers (31, 31',...) for digitalisation of the pulse width signal.

11. Axle generator according to claim 10, characterised in that between every two phases, two opto-couplers are provided, such that the respective first opto-coupler detects the upper, and the respective second opto-coupler detects the lower half-wave of the alternating voltage generated.

12. Axle generator according to one or more of the preceding claims, characterised in that the axle cover (18) of the generator (10) in the built-on state extends partly over the axle bearing support housing (11') and that the rotor flange (12) is provided on the periphery with a labyrinth seal (12') which bears on the periphery in the interior of the axle cover (18).

13. Use of the axle generator operated according to claim 9 in an anti-skid system in vehicles, in particular in rail-bound vehicles, in which the power supply to each anti-skid system is electrically independent from one coupled vehicle, in particular a rallway train, to the next, and the speed information determined in each case is fed into the control circuit of the anti-skid system as an input variable.

14. Use of the axle generator operated according to Claim 9 in a drive skid control system in vehicles, in particular in rall vehicles, in which the speed information determined in each case is fed into the control circuit of the drive skid control as an input variable.

## Revendications

1. Procédé pour produire de l'énergie électrique à partir de la rotation des essieux de véhicules, en particulier des véhicules roulant sur des rails, au moyen d'un dispositif à génératrice, dans lequel en plus de la production d'énergie électrique, on détermine la vitesse de rotation de l'essieu correspondant,
caractérisé en ce qu'aussi bien la production d'énergie électrique que la détermination de la vitesse de rotation sont réalisées exclusivement par l'intermédiaire d'une fonction de génératrice, le paramètre d'impulsion de chaque courbe de tension électrique induite étant évalué pour la détermination de la vitesse de rotation.

2. Procédé selon la revendication 1,
caractérisé en ce qu'une tension alternative triphasée est induite, et à partir des courbes de tension induite de chaque phase, les durées d'impulsion pour la détermination de la vitesse de rotation sont évaluées.

3. Procédé selon l'une des revendications 1 ou 2,
caractérisé en ce que, par l'intermédiaire de la détermination de la vitesse de rotation, on effectue un contrôle de la fonction de génératrice.

4. Procédé selon l'une ou plusieurs des revendications précédentes,
caractérisé en ce qu'à partir des durées d'impulsion mesurées de la courbe de tension induite, on détermine la vitesse du véhicule.

5. Dispositif à génératrice d'essieu pour des véhicules, en particulier des véhicules roulant sur des rails, comportant un rotor couplé à l'essieu du véhicule et muni d'aimants permanents agencés de façon répartie sur la périphérie, et un stator muni de bobines d'induction et écarté du rotor d'une fente d'air, ainsi qu'une électronique pour évaluer les fonctions de génératrice, en particulier pour la mise en oeuvre du procédé selon la revendication 1,
caractérisé en ce que dans l'état monté, le stator (14, 15) est agencé coaxialement autour de la périphérie externe du rotor (13), en ce que le corps conducteur magnétique du groupe de stator (14) relativement à ses faces polaires actives (14'), est plus petit dans son extension axiale que l'extension axiale de la face polaire (13') du groupe de rotor (13) de sorte que le rapport de couverture polaire entre le groupe de rotor (13) et le groupe de stator (14) dans chaque situation de fonctionnement est supérieur à 1, et en ce qu'à l'intérieur du corps conducteur magnétique du groupe de rotor (13), sont agencés des aimants permanents (16) s'étendant radialement par rapport à leurs axes polaires.

6. Génératrice d'essieu selon la revendication 5,
caractérisée en ce que le rotor (13) peut être monté directement au moyen d'une bride (12) sur la face frontale correspondante (11) de l'essieu.

7. Génératrice d'essieu selon l'une des revendications 5 ou 6,
caractérisée en ce que les aimants permanents (16) du rotor (13) sont maintenus par l'intermédiaire d'une bague de serrage (17) constituée d'un matériau amagnétique et agissant simultanément comme bague à réluctance.

8. Génératrice d'essieu selon l'une ou plusieurs des revendications précédentes,
caractérisée en ce que le stator (14) est agencé de façon solidaire à l'intérieur du couvercle d'essieu (18), et en ce que le couvercle d'essieu (18) peut être monté mécaniquement indépendamment du rotor (13) et de la bride de rotor (12), sur le boîtier de support correspondant (11') de la boîte d'essieu du véhicule.

9. Génératrice d'essieu selon l'une ou plusieurs des revendications précédentes,
caractérisée en ce qu'à l'intérieur du couvercle d'essieu (18) et de la génératrice, est montée de façon intégrée une unité de redressement électrique (19).

10. Génératrice d'essieu selon l'une ou plusieurs des revendications précédentes,
caractérisée en ce que, lors de la production d'une tension alternative triphasique, les phases sont reliées électriquement à des optocoupleurs (31, 31' ...) pour la numérisation du signal de durée d'impulsion.

11. Génératrice d'essieu selon la génération 10,
caractérisée en ce que deux optocoupleurs sont à chaque fois agencés entre deux phases de sorte que le premier optocoupleur détecte à chaque fois la demi-onde supérieure et le second optocoupleur détecte à chaque fois la demi-onde inférieure de la tension alternative produite.

12. Génératrice d'essieu selon l'une ou plusieurs des revendications précédentes,
caractérisée en ce que le couvercle d'essieu (18) de la génératrice (10) s'étend dans l'état monté partiellement au-dessus du boîtier de support (11') de la boîte d'essieu, et en ce que la bride de rotor (12) est munie sur la face périphérique d'un joint à labyrinthe (12') reposant sur la face périphérique interne dans le couvercle d'essieu (18).

13. Utilisation de la génératrice d'essieu entraînée selon la revendication 9, dans un système anti-patinage dans des véhicules, en particulier des véhicules roulant sur des rails, dans laquelle l'alimentation en énergie de chaque système anti-patinage d'un véhicule vers le véhicule couplé suivant, en particulier d'un train de chemin de fer, est électriquement autarcique, et l'information de vitesse de rotation à chaque fois détectée est fournie comme grandeur d'entrée au circuit de réglage du système anti-patinage.

14. Utilisation de la génératrice d'essieu entraînée selon la revendication 9, dans un système de réglage du glissement d'entraînement dans des véhicules, en particulier des véhicules roulant sur des rails, dans laquelle l'information de vitesse de rotation à chaque fois détectée est fournie comme grandeur d'entrée au circuit de réglage du système de réglage du glissement d'entraînement.
